# EUROPEAN PATENT SPECIFICATION

(11) **EP 4 085 579 B1**
(45) Date of publication and mention of the grant of the patent: **21.10.2026**
(21) Application number: 19958674.4
(22) Date of filing: 31.12.2019
(51) Int. Cl.: H04W 40/00, H04L 45/28

(54) **METHOD AND APPARATUS FOR ROUTING DATA IN A COMMUNICATION SYSTEM**
VERFAHREN UND VORRICHTUNG ZUM ROUTEN VON DATEN IN EINEM KOMMUNIKATIONSSYSTEM
PROCÉDÉ ET APPAREIL POUR LE ROUTAGE DES DONNÉES DANS UN SYSTÈME DE COMMUNICATION

(43) Date of publication of application: 09.11.2022
(73) Proprietor: Lenovo (Beijing) Limited, Beijing 100085 (CN)
(72) Inventor: WU, Lianhai, Chaoyang District Beijing 100028 (CN); LÖHR, Joachim, 65203 Wiesbaden (DE); YUE, Ran, Beijing 100083 (CN); HAN, Jing, Beijing 100024 (CN); WANG, Haiming, Beijing 100011 (CN)
(74) Representative: Openshaw & Co.
(86) International application number: PCT/CN2019/130557
(87) International publication number: WO 2021/134499

(56) References cited:
- WO-A1-2019/216670
- US-A1- 2013 177 305
- HUAWEI ET AL: "Lossless data delivery", vol. RAN WG2, no. Reno, USA; 20190513 - 20190517, 13 May 2019 (2019-05-13), XP051730421, Retrieved from the Internet <URL:1http://www.3gpp.org/ftp/Meetings%5F3GPP%5FSYNC/RAN2/Docs/R2%2D1906971%2Ezip> [retrieved on 20190513]
- SAMSUNG: "Upstream BH link RLF notification", vol. RAN WG2, no. Chongqing, China; 20191014 - 20191018, 4 October 2019 (2019-10-04), XP051805277, Retrieved from the Internet <URL:https://ftp.3gpp.org/tsg_ran/WG2_RL2/TSGR2_107bis/Docs/R2-1913813.zip R2-1913813_wasR2-1910376_UpstreamRLFNotf_v0.1.doc> [retrieved on 20191004]
- HUAWEI: "Routing in IAB network", vol. RAN WG3, no. Reno, NV, USA; 20191118 - 20191122, 8 November 2019 (2019-11-08), pages 1 - 8, XP051820651, Retrieved from the Internet <URL:https://ftp.3gpp.org/tsg_ran/WG3_Iu/TSGR3_106/Docs/R3-196992.zip R3-196992 Routing in IAB network.docx> [retrieved on 20191108]
- LG ELECTRONICS: "Resolving open issues on BH RLF", vol. RAN WG2, no. Chongqing, China; 20190814 - 20190818, 4 October 2019 (2019-10-04), XP051805267, Retrieved from the Internet <URL:https://ftp.3gpp.org/tsg_ran/WG2_RL2/TSGR2_107bis/Docs/R2-1913803.zip R2-1913803 [IAB] Resolving open issues on BH RLF.docx> [retrieved on 20191004]
- ZTE, SANECHIPS: "R3-195693 Discussion on Re-routing in IAB network", 3GPP DRAFT; R3-195693 DISCUSSION ON RE-ROUTING IN IAB NETWORK, vol. RAN WG3, 4 October 2019 (2019-10-04), Chongqing, China, pages 1 - 3, XP051792718
- ZTE, SANECHIPS: "Discussion on BAP configuration", 3GPP DRAFT; R3-195688 DISCUSSION ON BAP CONFIGURATION, vol. RAN WG3, 4 October 2019 (2019-10-04), Chongqing, China, pages 1 - 4, XP051792713
- HUAWEI: "Routing in IAB network", 3GPP DRAFT; R3-196992, vol. RAN WG3, 8 November 2019 (2019-11-08), Reno, NV, USA, pages 1 - 8, XP051820651
- ASUSTEK: "On the consideration of routing for reporting pre-emptive BSR", 3GPP TSG-RAN WG2 MEETING #107BIS, vol. RAN WG2, 4 October 2019 (2019-10-04), Chongqing, China, pages 1 - 4, XP051791755

## Description

### TECHNICAL FIELD

The present disclosure generally relates to wireless communication technology, and more particularly to the routing of data in a wireless communication system.

### BACKGROUND

In the 3rd Generation Partnership Project (3GPP), deployment of Relay Nodes (RNs) in a wireless communication system is promoted. One objective of deploying RNs is to enhance coverage area of a Base Station (BS, also called gNB in 5G networks) by improving the throughput of a mobile device (also known as a User Equipment (UE)) that is located in a coverage hole or far from the BS, which can result in relatively low signal quality.

In a wireless communication system which employs RNs, a BS that can provide connection to at least one RN is called a donor BS (or a donor node or a donor). An RN is connected to a donor BS by a backhaul link. The RN may hop through one or more RNs before reaching the donor BS, or may be directly connected to the donor BS. For the New Radio (NR) communication networks, 3GPP is envisioning an Integrated Access and Backhaul (IAB) architecture for supporting multi-hop relays, wherein a donor node with multi-connectivity is also supported by an IAB node. That is, the IAB node may have a plurality of active routes to the donor BS via multiple parent IAB nodes. A multi-hop network may provide more range extension than a single-hop network. This is relatively more beneficial with respect to wireless communications at frequencies above 6GHz, which have limited ranges when using single-hop backhauling. Multi-hop backhauling further enables backhauling around obstacles, e.g., buildings in an urban environment for in-cluster deployments.

In a wireless communication system, uplink transmission may be routed to a base station through one or more IAB nodes. Similarly, downlink transmission to a UE or an IAB node may be routed through one or more IAB nodes. However, a wireless backhaul link between two IAB nodes may fail under certain circumstances. Therefore, a method for routing or re-routing uplink transmission or downlink transmission is required for a wireless communication system when a failure occurs on the backhaul link.

An example of the prior art can be found in HUAWEI : "Lossless data delivery", 3GPP DRAFT; R2-1906971, 13 May 2019.

### SUMMARY OF THE DISCLOSURE

The invention is defined by the appended claims.

### BRIEF DESCRIPTION OF THE DRAWINGS

In order to describe the manner in which the advantages and features of the disclosure can be obtained, a description of the disclosure is rendered by reference to specific embodiments thereof, which are illustrated in the appended drawings. These drawings depict only exemplary embodiments of the disclosure and are not therefore to be considered limiting of its scope.
FIG. 1A illustrates a schematic wireless communication system according to some embodiments of the present disclosure;
FIG. 1B illustrates a schematic wireless communication system according to some embodiments of the present disclosure;
FIG. 2 illustrates an exemplary procedure of data transfer according to some embodiments of the present disclosure;
FIG. 3 illustrates an exemplary procedure of routing ID selection according to some embodiments of the present disclosure;
FIG. 4 illustrates an exemplary routing procedure according to some embodiments of the present disclosure;
FIG. 5 illustrates an exemplary procedure of bearer mapping according to some embodiments of the present disclosure;
FIG. 6 illustrates an exemplary procedure of handling a uplink transmission according to some embodiments of the present disclosure; and
FIG. 7 illustrates an example block diagram of an apparatus according to some embodiments of the present disclosure.

### DETAILED DESCRIPTION

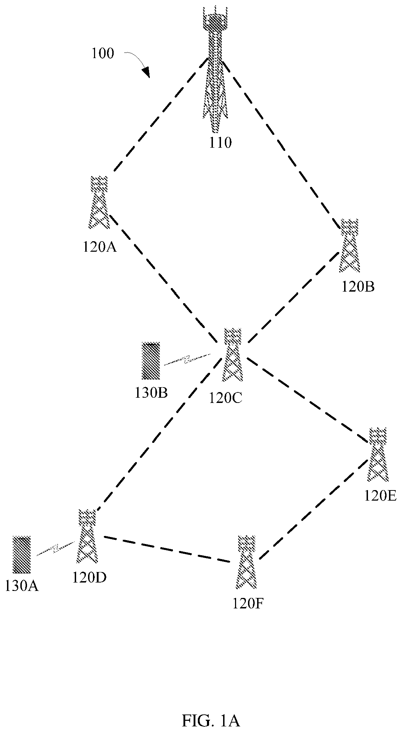

FIG. 1A illustrates a wireless communication system 100 according to some embodiments of the present disclosure.

Referring to FIG. 1A, the wireless communication system 100 can include an IAB donor node (e.g., donor node 110), some IAB nodes (e.g., IAB node 120A, IAB node 120B, IAB node 120C, IAB node 120D, IAB node 120E, and IAB node 120F), and some UEs (e.g., UE 130A and UE 130B). Although merely, for simplicity, one donor node is illustrated in FIG. 1A, it is contemplated that the wireless communication system 100 may include more donor node(s) in some other embodiments of the present disclosure. Similarly, although merely six IAB nodes are illustrated in FIG. 1A for simplicity, it is contemplated that the wireless communication system 100 may include more or fewer IAB nodes in some other embodiments of the present disclosure. Although merely two UEs are illustrated in FIG. 1A for simplicity, it is contemplated that the wireless communication system 100 may include more or fewer UEs in some other embodiments of the present disclosure.

IAB node 120A is directly connected to donor node 110. IAB node 120B is directly connected to donor node 110. IAB node 120A can be connected to donor node(s) other than donor node 110 in accordance with some other embodiments of the present disclosure. IAB node 120B can be connected to donor node(s) other than donor node 110 in accordance with some other embodiments of the present disclosure.

IAB node 120C can reach donor node 110 via IAB node 120A or IAB node 120B. IAB node 120A and IAB node 120B are parent nodes of IAB node 120C. In other words, IAB node 120C is a child node of IAB node 120A and IAB node 120B. IAB node 120D may be directly connected to IAB node 120C. In some cases, IAB node 120D may reach IAB node 120C via IAB node 120E and IAB node 120F. In these cases, IAB node 120D, IAB node 120E and IAB node 120F are downstream IAB nodes of IAB node 120C, and IAB node 120E is a child node of IAB node 120C. Similarly, IAB node 120E may be directly connected to IAB node 120C. In some cases, IAB node 120E may reach IAB node 120C via IAB node 120D and IAB node 120F. IAB node 120F can reach IAB node 120C via IAB node 120D or IAB node 120E. In some examples, IAB node 120F may reach donor node 110 via IAB node 120E, IAB node 120C, and IAB node 120A. In these examples, IAB node 120E, IAB node 120C, and IAB node 120A are upstream IAB nodes of IAB node 120F, and IAB node 120E is a parent node of IAB node 120F.

UE 130A is directly connected to IAB node 120D, and UE 130B is directly connected to IAB node 120C. In other words, UE 130A and UE 130B are served by IAB node 120D and IAB node 120C, respectively. In some other embodiments of the present disclosure, UE 130A and UE 130B may also be referred to as child nodes of IAB node 120D and IAB node 120C, respectively.

Each of IAB node 120A, IAB node 120B, IAB node 120C, IAB node 120D, IAB node 120E, and IAB node 120F may be directly connected to one or more UEs in accordance with some other embodiments of the present disclosure.

Each of IAB node 120A, IAB node 120B, IAB node 120C, IAB node 120D, IAB node 120E, and IAB node 120F may be directly connected to one or more IAB nodes in accordance with some other embodiments of the present disclosure.

In the wireless communication system 100, which provides multi-hop relay, a wireless backhaul link may fail due to, for example but is not limited to, blockage by moving object(s) (e.g., vehicle(s)), foliage (caused by seasonal changes), new building(s) (e.g., infrastructure changes). Such backhaul link failure may occur either on a physically stationary IAB node or a mobile IAB node. Various techniques have been developed to address this issue. In some embodiments of the present disclosure, assuming that a Radio Link Failure (RLF) occurs on the backhaul link between IAB node 120A and IAB node 120C, IAB node 120C may route or re-route data intended to be transmitted to donor node 110 via IAB node 120A to IAB node 120B. The above mentioned routing or re-routing technique will be described in detail in the following text.

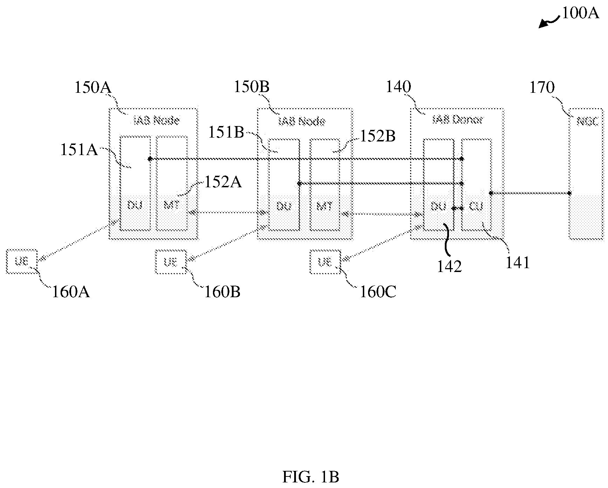

FIG. 1B illustrates an exemplary wireless communication system 100A according to some embodiments of the present disclosure.

Referring to FIG. 1B, the wireless communication system 100A may include IAB donor 140, IAB node 150A, IAB node 150B, UE 160A, UE 160B, UE 160C and a Next-Generation Core (NGC) 170.

Each of the IAB node 150A and IAB node 150B may include a Distributed Unit (DU) and a Mobile Termination (MT). In the context of this disclosure, MT is referred to as a function resided in an IAB node that terminates the radio interface layers of the backhaul Uu interface toward an IAB donor or other IAB nodes. The IAB nodes may be connected to an upstream IAB node or a BS (e.g., an IAB donor) via the MT function. The IAB nodes may be connected to UEs and a downstream IAB node via the DU.

IAB node 150A may be connected to an upstream IAB node 150B via MT 152A function. IAB node 150A may be connected to UE 160A via the DU 151A. IAB node 150B may be connected to an upstream IAB node or IAB donor 140 via MT 152B function. IAB node 150B may be connected to UE 160B via DU 151B. IAB node 150B may be connected to downstream IAB node 150A via DU 151B.

In some embodiments of the present disclosure, each of the IAB node 150A and IAB node 150B may host a Backhaul Adaptation Protocol (BAP) layer, a Radio Link Control (RLC) layer, a Medium Access Control (MAC) layer, and a Physical layer (PHY). BAP entities may be established at the BAP layer. A BAP entity may receive BAP Data Protocol Data Units (PDUs) from an ingress RLC channel of an ingress link (hereinafter, "Type 1 data"). Type 1 data may be uplink data or downlink data. For example, IAB node 150A may transmit data to IAB donor 140 via IAB node 150B. The data may be originated from IAB node 150A or a downstream node (e.g., UE 160A) of IAB node 150A. A BAP entity at the IAB node 150B may receive BAP Data Protocol Data Units (PDUs) associated with the data from IAB node 150A from an ingress RLC channel of the ingress link between IAB node 150A and IAB node 150B. A BAP entity may receive BAP Service Data Units (SDUs) from an upper layer for uplink transmission (hereinafter, "Type 2 data"). The upper layer refers to a layer above the BAP layer, for example, an Internet Protocol (IP) layer or an application layer. For example, UE 160B may transmit data to IAB donor 140 via IAB node 150B, or IAB node 150B itself may transmit data to IAB donor 140. A BAP entity at the IAB node 150B may receive BAP SDUs associated with the data from an upper layer.

In some embodiments of the present disclosure, a BAP PDU may include a header having a BAP ADDRESS field and a PATH field. The BAP ADDRESS field may carry the BAP address of the destination of the BAP PDU. The PATH field may carry an identity of a path to the destination.

Still referring to FIG. 1B, the BS (e.g., IAB donor 140) may include at least one DU to support UEs and MTs of downstream IAB nodes. One DU of a BS can support at least one cell. One cell can be supported by only one DU of a BS or one DU of an IAB node. A Central Unit (CU) 141 included in the IAB donor 140 controls the DUs of all IAB nodes (e.g., IAB node 150A and IAB node 150B) and the DU(s) (e.g., DU 142) resided in the IAB donor 140. The DU(s) and the CU of an IAB donor may be co-located or may be located in different positions. The DU(s) and the CU of the IAB donor are connected via F1 interface. In other words, the F1 interface provides means for interconnecting the CU and the DU(s) of an IAB donor. The F1 Application Protocol (F1AP) supports the functions of F1 interface by certain F1AP signaling procedures.

In some embodiments of the present disclosure, CU 141 of the IAB donor 140 may host Radio Resource Control (RRC), Service Data Adaptation Protocol (SDAP) and Packet Data Convergence Protocol (PDCP) layers of the IAB donor 140. DU 142 of the IAB donor 140 may host Backhaul Adaptation Protocol (BAP) layer, Radio Link Control (RLC) layer, Medium Access Control (MAC) layer and Physical layer (PHY) of the IAB donor 140. BAP entities may be established at the BAP layer of the DU 142. A BAP entity at the BAP layer of the DU 142 may receive BAP SDUs from an upper layer for downlink transmission (hereinafter, "Type 3 data"). The upper layer refers to a layer above the BAP layer, for example, an Internet Protocol (IP) layer or an application layer. For example, IAB donor 140 may transmit data to IAB nodes (e.g., IAB node 150A and IAB node 150B) or UEs (e.g., UE 160A, UE 160B, UE 160C).

The wireless communication system 100A is in a standalone (SA) mode, in which each IAB node has only one parent node. In some other embodiments of the present disclosure, a wireless communication system may be in a non-standalone (NSA) mode, in which one or more IAB nodes may have more than one parent node.

Referring back to FIG. 1A, IAB node 120A, IAB node 120B, IAB node 120C, IAB node 120D, IAB node 120E, and IAB node 120F in FIG. 1A may function as IAB node 150A or IAB node 150B in FIG 1B, and the donor node 110 in FIG. 1A may function as IAB donor 140 in FIG 1B.

A BAP layer may support functions such as routing or re-routing packets to the next hop, determination of BAP destination and BAP path for packets from upper layers, and determination of egress RLC channels for packets routed to the next hop. More details on the functionalities of the BAP layer according to the embodiments of the present disclosure will be illustrated in the following text in combination with the appended drawings.

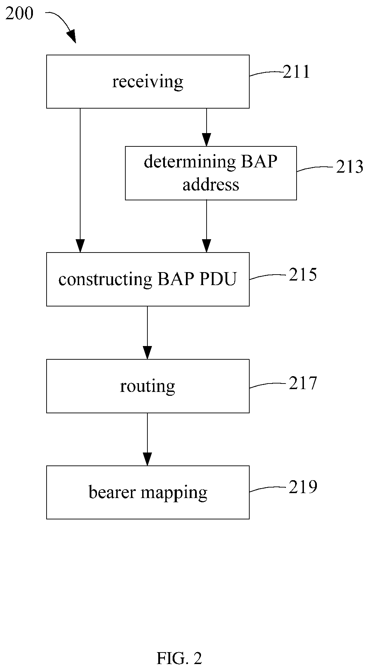

FIG. 2 illustrates an exemplary procedure 200 of data transfer according to some embodiments of the present disclosure. The exemplary procedure may occur at a BAP layer located at a communication device (e.g., IAB nodes shown in FIGS. 1A and 1B) or a DU (e.g., DU of donor node 110 in FIG. 1A or DU 142 shown in FIG. 1B) of a base station. BAP entities may be established at the BAP layer.

Referring to FIG. 2, at operation 211, in some cases, a BAP entity established at the BAP layer may receive a BAP PDU from an ingress RLC channel of an ingress link (Type 1 data). In response to receiving Type 1 data, the BAP entity may, at operation 215, construct a BAP data PDU according to the received BAP PDU. For example, the BAP entity may construct a BAP data PDU by setting its BAP ADDRESS field to the BAP ADDRESS field in the header of the received BAP PDU, and setting its PATH field to the PATH field in the header of the received BAP PDU.

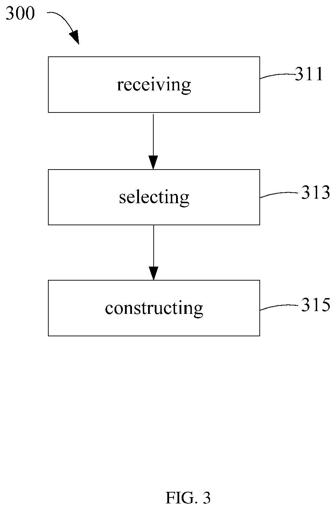

In some cases, at operation 211, the BAP entity may receive a BAP SDU from an upper layer (Type 2 data or Type 3 data). In response to receiving Type 2 data or Type 3 data, the BAP entity may, at operation 213, determine a BAP address for the BAP SDU. In some embodiments, the BAP entity may also determine a BAP path identity for the BAP SDU. Details regarding the determination of the BAP address and the BAP path identity will be described in the following text with respect to FIG. 3. Then, the BAP entity may, at operation 215, construct a BAP data PDU by setting its BAP ADDRESS field to the determined BAP address and setting its PATH field to the determined BAP path identity.

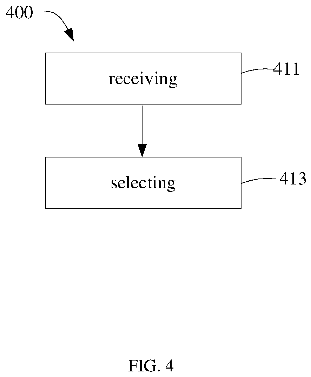

At operation 217, the BAP entity may perform routing to select an egress link for transmitting the BAP data PDU. In some embodiments of the present disclosure, in case of a backhaul RLF on the selected egress link, the BAP entity may reselect another egress link to re-route the BAP data PDU. Details regarding the routing or re-routing will be described in the following text with respect to FIG. 4.

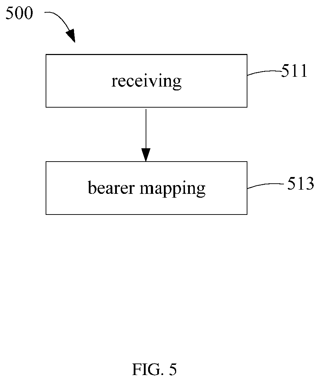

At operation 219, the BAP entity may perform bearer mapping to select an egress RLC channel of the selected egress link. Then, the BAP entity may submit the BAP data PDU to the selected egress RLC channel of the selected egress link for transmission. Bearer mapping is also need for packet re-routing cases. For example, the BAP entity may perform bearer mapping to a reselected egress RLC channel of the reselected egress link. Details regarding the bearer mapping will be described in the following text with respect to FIG. 5.

It should be appreciated by persons skilled in the art that the sequence of the operations in exemplary procedure 200 may be changed and some of the operations in exemplary procedure 200 may be eliminated or modified.

FIG. 3 illustrates an exemplary procedure 300 of routing ID selection according to some embodiments of the present disclosure. The exemplary procedure 300 is applicable to the above-mentioned procedure 200. Details described in all the foregoing embodiments of the present disclosure are applicable for the embodiments shown in FIG. 3.

Referring to FIG. 3, in some embodiments of the present disclosure, at operation 311, a communication device (e.g., IAB nodes in FIGS. 1A and 1B) may receive configuration information indicating at least one candidate routing identity (ID) from a base station (e.g., donor node 110 in FIG. 1A or IAB donor 140 in FIG. 1B). The at least one candidate routing identity may be configured for packet re-routing purpose. Each candidate routing identity indicates at least one of a BAP address, a BAP path identity, and a next hop BAP address. The configuration information may be received via F1 signaling or a RRC signaling.

At operation 313, in response to receiving, at the BAP layer of the communication device, a BAP SDU from an upper layer for uplink transmission (Type 2 data), the communication device may select a routing ID for transmitting the Type 2 data based on uplink backhaul configuration information, as defined in 3GPP technical specification. The upper layer refers to a layer above the BAP layer, for example, an Internet Protocol (IP) layer or an application layer. The routing ID may indicate a BAP address, which indicates the destination of the data. The routing ID may also indicate a BAP path identity, which indicates a path to the destination. In some scenarios, a RLF may occur on the egress link associated with the selected routing ID. In these scenarios, the communication device may select or reselect a candidate routing identity from the at least one candidate routing identity, wherein an egress link associated with the selected candidate routing identity does not include the above-mentioned failed link. The communication device may, at operation 315, use the BAP address and the BAP path identity of the selected candidate routing identity to construct a BAP PDU.

For example, referring back to FIG. 1A, UE 130B may transmit data to donor node 110 via IAB node 120C. IAB node 120C may select a routing ID identifying the route "IAB node 120C -> IAB node 120A -> donor node 110" for transmitting the data. In the selected route, IAB node 120A may be referred to as a next hop IAB node. However, a RLF may occur on the backhaul link between IAB node 120C and IAB node 120A. In this scenario, the selected route would not be available because the egress link between IAB node 120C and the next hop IAB node 120A is failed. IAB node 120C may select or reselect, for example, a candidate routing identity identifying the route "IAB node 120C -> IAB node 120B -> donor node 110" for transmitting the data. IAB node 120C may avoid selecting a candidate routing identity associated with the failed link between IAB node 120C and IAB node 120A.

Referring to FIG. 3, in some embodiments of the present disclosure, at operation 311, a DU (e.g., DU of donor node 110 in FIG. 1A or DU 142 shown in FIG. 1B) of a base station may receive configuration information indicating at least one candidate path identity (ID) from a CU (e.g., CU of donor node 110 in FIG. 1A or CU 141 shown in FIG. 1B) of the base station. The at least one candidate path identity may be configured for packet re-routing purpose. Each candidate path identity indicates a BAP path identity. The configuration information may be received via F1 signaling.

At operation 313, in response to receiving, at the BAP layer of the DU, a BAP SDU from an upper layer for downlink transmission (Type 3 data), the DU may select a path ID for transmitting the Type 3 data based on downlink backhaul configuration information, as defined in 3GPP technical specification. The upper layer refers to a layer above the BAP layer, for example, an Internet Protocol (IP) layer or an application layer. The path ID may indicate a path to the destination of the data. In some scenarios, a RLF may occur on a backhaul link associated with the selected path ID. In these scenarios, the DU may select or reselect a candidate path identity from the at least one candidate path identity, wherein the backhaul link associated with the selected candidate path identity does not include the above-mentioned failed backhaul link. The DU may, at operation 315, use the selected candidate path identity and the destination of the data to construct a BAP PDU.

For example, referring back to FIG. 1A, donor node 110 may transmit data to UE 130B (i.e., the destination). Donor node 110 (e.g., DU of the donor node 110) may select a path for transmitting the data. Donor node 110 may select a path ID associated with the link between the donor node 110 and IAB node 120A for transmitting the data to UE 130B. However, a RLF may occur on the backhaul link between IAB node 120A and donor node 110. Therefore, from the perspective of donor node 110, the egress link between donor node 110 and IAB node 120A is broken. In this scenario, donor node 110 may select or reselect, for example, a candidate path identity associated with the egress link between the donor node 110 and IAB node 120B for transmitting the data. Donor node 110 may avoid selecting a candidate path identity associated with the failed link between donor node 110 and IAB node 120A.

It should be appreciated by persons skilled in the art that the sequence of the operations in exemplary procedure 300 may be changed and some of the operations in exemplary procedure 300 may be eliminated or modified.

FIG. 4 illustrates an exemplary routing procedure 400 according to some embodiments of the present disclosure. The exemplary procedure 400 is applicable to the above-mentioned procedure 200. Details described in all the foregoing embodiments of the present disclosure are applicable for the embodiments shown in FIG. 4.

Referring to FIG. 4, in some embodiments of the present disclosure, a communication device (e.g., IAB nodes shown in FIGS. 1A and 1B) may receive, at operation 411, configuration information indicating routing configuration from a base station. The configuration information may be received via F1 signaling or a RRC signaling. In some embodiments of the present disclosure, a DU (e.g., DU of donor node 110 in FIG. 1A or DU 142 shown in FIG. 1B) of a base station may receive, at operation 411, configuration information indicating routing configuration from a CU of the base station. The configuration information may be received via F1 signaling. In some embodiments of the present disclosure, the routing configuration may include at least one entry, and each entry may include at least one of a BAP address, a BAP path identity, and a next hop BAP address.

At operation 413, the communication device or the DU may select an egress link for transmit a BAP data PDU based on the routing configuration and the header of the BAP data PDU.

For example, in some embodiments of the present disclosure, the communication device or the DU may determine that there is an entry in the routing configuration having the same BAP address as the BAP address in the BAP ADDRESS field of the BAP data PDU and a BAP path identity the same as the BAP path identity in the PATH field of the BAP data PDU. The communication device or the DU may also determine that an egress link corresponding to the next hop BAP address of the above entry is available, that is, no RLF occurs on the egress link. The communication device or the DU may select the above entry and may select the egress link corresponding to the next hop BAP address of the selected entry.

In some embodiments of the present disclosure, the communication device or the DU may determine that the routing configuration does not include such entry. For example, an egress link corresponding to the next hop BAP address of an entry in the routing configuration, which has the same BAP address as the BAP address in the BAP ADDRESS field of the BAP data PDU and a BAP path identity the same as the BAP path identity in the PATH field of the BAP data PDU, is not available. This may happen when, for example, a RLF occurs on the egress link. In these embodiments, the communication device or the DU may try to re-route the BAP data PDU, which has not been acknowledged by a lower layer. The lower layer refers to a layer below the BAP layer, for example, a RRC layer.

For example, the communication device or the DU may determine that there is at least one entry in the routing configuration having the same BAP address as the BAP address in the BAP ADDRESS field of the BAP data PDU, and an egress link corresponding to the next hop BAP address of the above at least one entry is available. If only one entry satisfy the above requirements, the communication device or the DU may select this entry. If there are more than one entry satisfy the above requirements, the communication device or the DU may select one from the more than one entry based on certain criteria including, for example, channel qualities, loading, or configured priority. For example, a priority may be configured for each entry. The entry having the highest priority among the more than one entry may be selected. As mentioned above, each entry is associated with an egress link corresponding to the next hop BAP address of the entry. In some examples, the entry whose associated egress link having the best channel quality among the more than one entry may be selected. The channel quality may be determined based on at least one or more of the following: Reference Signal Received Power (RSRP), Reference Signal Strength Indicator (RSSI), or Reference Signal Receiving Quality (RSRQ). Other channel quality metrics may also be employed. In some examples, the entry whose associated egress link having the lightest loading among the more than one entry may be selected. The communication device or the DU may select the egress link corresponding to the next hop BAP address of the selected entry.

In some embodiments of the present disclosure, the communication device or the DU may determine that there is no entry in the routing configuration having the same BAP address as the BAP address in the BAP ADDRESS field of the BAP data PDU. In some embodiments of the present disclosure, the communication device or the DU may select one of the available egress links for data transmission. For example, the communication device may randomly select an available egress link for data transmission. In some embodiments of the present disclosure, the communication device or the DU may transmit assistant information to a base station. The assistant information may indicate no available link for transmitting the data. In some embodiments, the communication device may transmit the assistant information to a base station by RRC signaling. In some embodiments, the DU of a base station may transmit the assistant information to a CU of the base station by F1 signaling.

The above procedure is applicable to both uplink transmission and downlink transmission. For example, referring back to FIG. 1A, UE 130A may transmit data to donor node 110. IAB node 120D may select a route "IAB node 120C -> IAB node 120A -> donor node 110" for transmitting the data. IAB node 120C may receive the data from an ingress RLC channel of an ingress link between IAB node 120C and IAB node 120D. IAB node 120C may decode the data into a BAP data PDU having a BAP ADDRESS field and a PATH field corresponding to the above route. IAB node 120C may determine that a RLF occurs on the backhaul link between IAB node 120A and IAB node 120C. In this case, IAB node 120C may determine that there is an entry in the routing configuration having the same BAP address as the BAP address in the BAP ADDRESS field of the BAP data PDU and a BAP path identity the same as the BAP path identity in the PATH field of the BAP data PDU. For example, IAB node 120C may found an entry associated with the route "IAB node 120C -> IAB node 120A -> donor node 110." However, since a RLF occurs on the backhaul link between IAB node 120A and IAB node 120C, the egress link (e.g., from IAB node 120C to IAB node 120A) corresponding to the next hop BAP address of the entry is not available.

IAB node 120C may then determine whether there is an entry in the routing configuration having the same BAP address as the BAP address in the BAP ADDRESS field of the BAP data PDU, and an egress link corresponding to the next hop BAP address of the above at least one entry is available. For example, IAB node 120C may found that the egress link from IAB node 120C to IAB node 120B is available, and may select this egress link for data transmission.

In some cases, IAB node 120C may determine that there is no entry in the routing configuration having the same BAP address as the BAP address in the BAP ADDRESS field of the BAP data PDU. In these cases, in some embodiments, IAB node 120C may select any one of the available egress links for data transmission. In some other embodiments, IAB node 120C may transmit to donor node 110 assistant information indicating no available link for transmitting the data.

In some other examples, donor node 110 may select a route "IAB node 120A -> IAB node 120C -> IAB node 120D" for transmitting data to UE 130A. IAB node 120C may receive the data from an ingress RLC channel of an ingress link between IAB node 120C and IAB node 120A. IAB node 120C may decode the data into a BAP data PDU having a BAP ADDRESS field and a PATH field corresponding to the above route. IAB node 120C may determine that a RLF occurs on the backhaul link between IAB node 120C and IAB node 120D. IAB node 120C may found that an entry in the routing configuration having the same BAP address as the BAP address in the BAP ADDRESS field of the BAP data PDU. For example, IAB node 120C may found that an entry associated with the route "IAB node 120E -> IAB node 120F -> IAB node 120D" in the routing configuration, and may select the egress link from IAB node 120C to IAB node 120E for data transmission.

In some cases, IAB node 120C may determine that there is no entry in the routing configuration having the same BAP address as the BAP address in the BAP ADDRESS field of the BAP data PDU. That is, no entry in the routing configuration has a BAP address indicating IAB node 120D. In some embodiments, IAB node 120C may select any one of the available egress links for data transmission. In some other embodiments, IAB node 120C may transmit to donor node 110 assistant information indicating no available link for transmitting the data.

It should be appreciated by persons skilled in the art that the sequence of the operations in exemplary procedure 400 may be changed and some of the operations in exemplary procedure 400 may be eliminated or modified. For example, in some embodiments of the present disclosure, routing configuration may not be configured. In these embodiments, the configuration operation (e.g., operation 411) may be eliminated. The communication device or the DU may, at operation 413, select any of the egress links for data transmission.

After selecting an egress link, a communication device or a DU of a base station may perform bearing mapping to map UE bearer/ingress RLC channel to egress RLC channel(s) of the selected egress link. Such bearer mapping may be performed based on backhaul RLC channel mapping configuration configured by a base station (e.g., CU of the base station). In some embodiments of the present disclosure, a base station may configure respective backhaul RLC channel mapping configuration for uplink transmission and downlink transmission. In some embodiments of the present disclosure, for Type 1 data, the base station may configure bearer mapping between an ingress RLC channel for an ingress link and an egress RLC channel of an egress link. In some embodiments of the present disclosure, for Type 2 data and Type 3 data, the base station may configure bearer mapping between UE bearer(s) and egress RLC channel(s).

As mentioned above, in the case of a RLF on an originally selected egress link, a communication device or a DU may perform re-routing and select a new egress link. In this scenario, the communication device or the DU still need to perform bearing mapping to map UE bearer/ingress RLC channel to egress RLC channel(s) of the newly selected egress link. Details regarding the bearing mapping in the case of a RLF on an originally selected egress link will be described in the following text with respect to FIG. 5.

FIG. 5 illustrates an exemplary procedure 500 of bearer mapping according to some embodiments of the present disclosure. The exemplary procedure 500 is applicable to the above-mentioned procedure 200. Details described in all the foregoing embodiments of the present disclosure are applicable for the embodiments shown in FIG. 5.

Referring to FIG. 5, in some embodiments of the present disclosure, a communication device (e.g., IAB nodes shown in FIGS. 1A and 1B) may receive, at operation 511, configuration information indicating bearer mapping configuration from a base station. The configuration information may be received via F1 signaling or a RRC signaling. In some embodiments of the present disclosure, a DU (e.g., DU of donor node 110 in FIG. 1A or DU 142 shown in FIG. 1B) of a base station may receive, at operation 511, configuration information indicating bearer mapping configuration from a CU of the base station. The configuration information may be received via F1 signaling. In some embodiments of the present disclosure, the bearer mapping configuration is configured for packet re-routing purpose.

At operation 513, the communication device or the DU may perform bearer mapping based on the bearer mapping configuration.

In some embodiments of the present disclosure, for Type 1 data, Type 2 data, and Type 3 data, the base station may configure a common default egress RLC channel of an egress link for re-routing. For example, at a communication device, for Type 1 data and Type 2 data, the bearer mapping configuration may indicate a common default egress RLC channel (e.g., RLC channel #A) of an egress link (e.g., egress link #A) for re-routing. If egress link #A is selected for re-routing, the communication device may map Type 1 data or Type 2 data to RLC channel #A of the selected egress link for re-routing. At a DU of a base station, for Type 3 data, the bearer mapping configuration may indicate a default egress RLC channel (e.g., RLC channel #B) of an egress link (e.g., egress link #B) for re-routing. If egress link #B is selected for re-routing, the DU may map Type 3 data to RLC channel #B of the selected egress link for re-routing.

In some embodiments of the present disclosure, for Type 1 data, Type 2 data, and Type 3 data, the base station may configure respective default egress RLC channels of an egress link for re-routing. For example, at a communication device, for Type 1 data, the bearer mapping configuration may indicate a default egress RLC channel (e.g., RLC channel #A-1) of an egress link (e.g., egress link #A) for re-routing, and for Type 2 data, the bearer mapping configuration may indicate another default egress RLC channel (e.g., RLC channel #A-2) of the egress link (e.g., egress link #A) for re-routing. If egress link #A is selected for re-routing, the communication device may map Type 1 data to RLC channel #A-1 of the selected egress link for re-routing, and may map Type 2 data to RLC channel #A-2 of the selected egress link for re-routing. At a DU of a base station, for Type 3 data, the bearer mapping configuration may indicate a default egress RLC channel (e.g., RLC channel #B) of an egress link (e.g., egress link #B) for re-routing. If egress link #B is selected for re-routing, the DU may map Type 3 data to RLC channel #B of the selected egress link for re-routing.

In some embodiments of the present disclosure, for Type 1 data, the base station may configure bearer mapping between a UE bearer in an ingress RLC channel of an ingress link and an egress RLC channel of an egress link for re-routing. In some other embodiments of the present disclosure, for Type 1 data, the base station may configure bearer mapping between an ingress RLC channel of an ingress link and an egress RLC channel of an egress link for re-routing.

In some embodiments of the present disclosure, for Type 2 data, the base station may configure bearer mapping between a UE bearer and an egress RLC channel of an egress link for re-routing. In some embodiments of the present disclosure, for Type 3 data, the base station may configure bearer mapping between a UE bearer and an egress RLC channel of an egress link for re-routing.

For example, at a communication device, for Type 1 data (a BAP PDU from an ingress RLC channel of an ingress link), one or more UE bearers (e.g., UE bearer #A and UE bearer #B) may be mapped to the ingress RLC channel (e.g., RLC channel #A) of the ingress link. In some examples, the bearer mapping configuration received at the communication device may indicate bearer mapping between UE bearer #A in RLC channel #A and an egress RLC channel (e.g., RLC channel #B-1) of an egress link (e.g., egress link #B) for re-routing, and may indicate bearer mapping between UE bearer #B in RLC channel #A and an egress RLC channel (e.g., RLC channel #B-2) of the egress link (e.g., egress link #B) for re-routing. If egress link #B is selected for re-routing of the Type 1 data, the communication device may map UE bearer #A to RLC channel #B-1, and map UE bearer #B to RLC channel #B-2 of the selected egress link for re-routing.

In some other examples, the bearer mapping configuration may indicate bearer mapping between RLC channel #A and RLC channel #B-1 of egress link #B for re-routing. If egress link #B is selected for re-routing of the Type 1 data, the communication device may map UE bearers (e.g., UE bearer #A and UE bearer #B) in RLC channel #A to RLC channel #B-1 of the selected egress link for re-routing.

Similarly, at a communication device, for Type 2 data (BAP SDUs from an upper layer for uplink transmission), the bearer mapping configuration may indicate bearer mapping between a UE bearer associated with the Type 2 data and an egress RLC channel of an egress link for re-routing. At a DU of a base station, for Type 3 data (BAP SDUs from an upper layer for downlink transmission), the bearer mapping configuration may indicate bearer mapping between a UE bearer associated with the Type 3 data and an egress RLC channel of an egress link for re-routing.

In some embodiments of the present disclosure, in response to receiving the bearer mapping configuration, the communication device or the DU may allow re-routing. In some other embodiments of the present disclosure, the bearer mapping configuration may not be configured. In these embodiments, the communication device or the DU may forbid re-routing.

It should be appreciated by persons skilled in the art that the sequence of the operations in exemplary procedure 500 may be changed and some of the operations in exemplary procedure 500 may be eliminated or modified.

It should be appreciated by persons skilled in the art that although operations in exemplary procedure 300, exemplary procedure 400, and exemplary procedure 500 show respective configuration operations (e.g., operations 311, 411, and 511) for receiving configuration information. Two or more of these configuration operations may be combined into one. For example, a communication device or a DU of a base station may receive routing configuration, bearer mapping configuration, configuration information indicating at least one candidate routing identity in one or more messages.

In wireless communication systems, a buffer status reporting procedure is used to provide information about the size of data in uplink (UL) buffers of a UE to a base station serving the UE. A Buffer Status Report (BSR) may be triggered when UL data arrives at a UE transmission buffer. In response to the BSR from the UE, the base station may transmit to the UE a UL grant for subsequent data transmission from the UE. Similarly, a BSR may be triggered when UL data arrives at an IAB node, and may be transmitted to a parent node of the IAB node. In response to the BSR, the parent node of the IAB node may transmit to the IAB node a UL grant for subsequent data transmission from the IAB node.

In multi-hop networks, an IAB node may transmit a BSR to its parent node before the IAB node receives the UL data from its child node (a UE or another IAB node) to reduce latency resulted from UL scheduling. Such BSR that is transmitted before the reception of the UL data from the child node are hereinafter referred to as a Pre-emptive BSR (Pre-BSR). A Scheduling Request (SR) is used to request UL resources. The SR may be triggered if the UE or the IAB node does not have a UL resource available for BSR or Pre-BSR transmission.

As mentioned above, when a RLF occurs on the link between an IAB node (e.g., IAB node 120C in FIG. 1A) and its parent node (e.g., IAB node 120A in FIG. 1A), IAB node 120C may perform UL packet re-routing for the data (hereinafter, "re-routed data") intended to IAB node 120A and buffered at IAB node 120C to, for example, IAB node 120B. In this scenario, in some embodiments of the present disclosure, a BSR indicating information about the size of the re-routed data may not be triggered or transmitted. As a consequence, uplink resources associated with a previous BSR may be insufficient for transmitting the re-routed data. IAB node 120C may obtain sufficient uplink resources for transmitting the re-routed data only after the transmission of a next BSR. This may cause latency for UL data transmission.

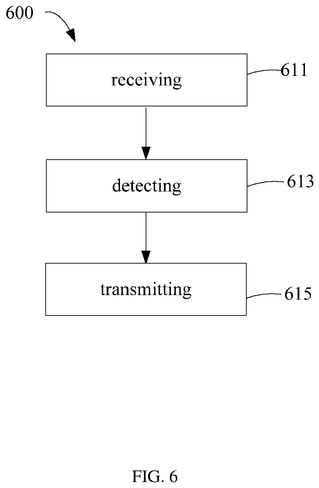

In some other embodiments of the present disclosure, in response to a RLF on the link between an IAB node and its parent node and re-routing the data to the reselected parent node, a BSR or Pre-BSR may be triggered at the IAB node (e.g., IAB node 120C) and some of its upstream IAB node(s) (e.g., IAB node 120B) to request uplink resources for transmitting the re-routed data. Such UL scheduling procedure will be described in detail in the following text with respect to FIG. 6.

FIG. 6 illustrates a flow chart of exemplary procedure 600 handling a UL transmission according to some embodiments of the present disclosure. Details described in all the foregoing embodiments of the present disclosure are applicable for the embodiments shown in FIG. 6.

Referring to FIG. 6, at operation 611, a communication device may receive a UL transmission from a child node of the communication device. The communication device may select an egress link (original egress link) between the communication device and a parent node of the communication device for transmitting the UL transmission.

At operation 613, the communication device may detect a RLF on the original egress link. The communication device may then re-route the UL transmission to another egress link (re-routed egress link) between the communication device and another parent node of the communication device. The re-routing procedure is described above with respect to FIGS. 2-5, and thus is omitted herein.

In some embodiments of the present disclosure, in response to the detection of the RLF on the original egress link, the selection of the re-routed egress link, or the re-routing procedure, the communication device may trigger a BSR or a Pre-BSR associated with the re-routed UL transmission. In other words, a new trigger condition (e.g., detection of a RLF on the original egress link, selection of the re-routed egress link, or upon re-routing) may be configured for BSR or Pre-BSR transmission. At operation 615, the communication device may transmit the BSR or the Pre-BSR to the another parent node.

In some embodiments of the present disclosure, during the re-routing procedure (e.g., a bearer mapping procedure), an egress RLC channel of the re-routed egress link may be reselected for carrying the re-routed UL transmission. The egress RLC channel of the re-routed egress link may correspond to a logical channel in a Logical Channel Group (LCG). This logical channel may be considered as having the highest priority level within the LCG. In this manner, the communication device may trigger a BSR or a Pre-BSR associated with the above logical channel to request uplink resources for transmitting the re-routed data. At operation 615, the communication device may transmit the BSR or the Pre-BSR to the another parent node.

In some embodiments of the present disclosure, a SR may be triggered if the communication device does not have UL resource for transmitting the BSR or Pre-BSR.

It should be appreciated by persons skilled in the art that the sequence of the operations in exemplary procedure 600 may be changed and some of the operations in exemplary procedure 600 may be eliminated or modified.

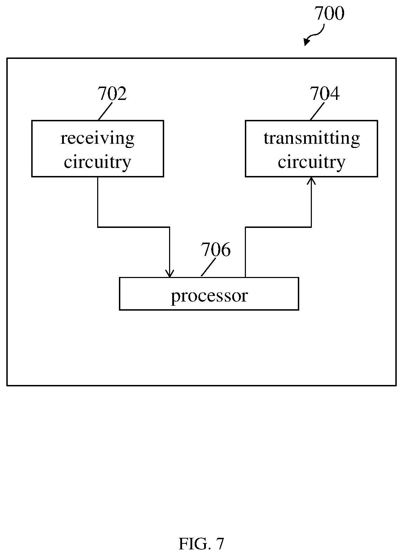

FIG. 7 illustrates an example block diagram of an apparatus 700 according to some embodiments of the present disclosure.

As shown in FIG. 7, the apparatus 700 may include at least one non-transitory computer-readable medium (not illustrated in FIG. 7), a receiving circuitry 702, a transmitting circuitry 704, and a processor 706 coupled to the non-transitory computer-readable medium (not illustrated in FIG. 7), the receiving circuitry 702 and the transmitting circuitry 704. The apparatus 700 may be a BS or a communication device (e.g., an IAB node or a UE).

Although in this figure, elements such as processor 706, transmitting circuitry 704, and receiving circuitry 702 are described in the singular, the plural is contemplated unless limitation to the singular is explicitly stated. In some embodiments of the present disclosure, the receiving circuitry 702 and the transmitting circuitry 704 are combined into a single device, such as a transceiver. In certain embodiments of the present disclosure, the apparatus 700 may further include an input device, a memory, and/or other components.

In some embodiments of the present disclosure, the non-transitory computer-readable medium may have stored thereon computer-executable instructions to cause a processor to implement the method with respect to the communication device or IAB node as described above. For example, the computer-executable instructions, when executed, cause the processor 706 interacting with receiving circuitry 702 and transmitting circuitry 704, so as to perform the steps with respect to the communication devices or IAB nodes depicted in FIGS. 1A, 1B, and 2-6.

In some embodiments of the present disclosure, the non-transitory computer-readable medium may have stored thereon computer-executable instructions to cause a processor to implement the method with respect to the BS as described above. For example, the computer-executable instructions, when executed, cause the processor 706 interacting with receiving circuitry 702 and transmitting circuitry 704, so as to perform the steps with respect to the IAB donors or base stations depicted in FIGS. 1A, 1B, and 2-6.

In some embodiments of the present disclosure, the non-transitory computer-readable medium may have stored thereon computer-executable instructions to cause a processor to implement the method with respect to the BS as described above. For example, the computer-executable instructions, when executed, cause the processor 706 interacting with receiving circuitry 702 and transmitting circuitry 704, so as to perform the steps with respect to the DUs of the IAB donors or base stations depicted in FIGS. 1A, 1B, and 2-6.

In some embodiments of the present disclosure, the non-transitory computer-readable medium may have stored thereon computer-executable instructions to cause a processor to implement the method with respect to the BS as described above. For example, the computer-executable instructions, when executed, cause the processor 706 interacting with receiving circuitry 702 and transmitting circuitry 704, so as to perform the steps with respect to the CUs of the IAB donors depicted in FIGS. 1A, 1B, and 2-6.

Those having ordinary skill in the art would understand that the steps of a method described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. Additionally, in some aspects, the steps of a method may reside as one or any combination or set of codes and/or instructions on a non-transitory computer-readable medium, which may be incorporated into a computer program product.

In this document, the terms "includes", "including", or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a", "an", or the like does not, without more constraints, preclude the existence of additional identical elements in the process, method, article, or apparatus that includes the element. Also, the term "another" is defined as at least a second or more. The term "having" and the like, as used herein, are defined as "including."

## Claims

1. An apparatus (700) for wireless communication, comprising: at least one memory; and at least one processor (706) coupled with the at least one memory and configured to cause the apparatus (700) to:
receive (411), from a base station, configuration information, wherein the configuration information indicates routing configuration and bearer mapping configuration;
detect (413) a failure on a first egress link between the apparatus (700) and a first next hop communication device, wherein the first next hop communication device is a parent node of the apparatus (700);
re-route first data intended to be transmitted on the first egress link, wherein the first data has not been acknowledged by a layer lower than a Backhaul Adaptation Protocol, BAP, layer of the apparatus (700);
reselect a second egress link between the apparatus (700) and a second next hop communication device based on the routing configuration;
reselect an egress Radio Link Control, RLC, channel of the second egress link based on bearer mapping configuration;
submit the first data to the reselected egress RLC channel of the second egress link; and
transmit, to the second next hop communication device, in response to the failure on the first egress link and re-routing the first data to the second next hop communication device, a Buffer Status Report, BSR, or a Pre-emptive BSR, Pre-BSR, associated with the first data to the second next hop communication device.

2. The apparatus (700) of claim 1, wherein the reselected egress RLC channel corresponds to a logical channel in a Logical Channel Group, LCG, and the logical channel is considered as having the highest priority level within the LCG.

3. The apparatus (700) of claim 1, wherein the at least one processor (706) coupled with the at least one memory is further configured to cause the apparatus (700) to:
transmit a Scheduling Request, SR, to the second next hop communication device if there is no uplink resource available for transmitting the BSR or the Pre-BSR.

4. The apparatus (700) of claim 1, wherein the configuration information further indicates at least one candidate routing identity, and wherein each candidate routing identity indicates a BAP address, a BAP path identity, and a next hop BAP address.

5. The apparatus (700) of claim 4, wherein the at least one processor (706) coupled with the at least one memory is further configured to cause the apparatus (700) to:
receive second data from an upper layer; and
encode the second data into a BAP Protocol Data Unit, PDU, comprising a BAP address field and a path field by:
reselecting a candidate routing identity from the at least one candidate routing identity, wherein an egress link associated with the selected candidate routing identity does not include the failed first egress link between the apparatus (700) and the first next hop communication device; and
constructing the BAP PDU by setting the BAP address field to the BAP address of the selected candidate routing identity and setting the path field to the BAP path identity of the selected candidate routing identity.

6. The apparatus (700) of claim 1, wherein the routing configuration comprises at least one entry, each entry comprising a BAP address and a next hop BAP address.

7. The apparatus (700) of claim 6, wherein each entry of the routing configuration further comprises a path identity.

8. The apparatus (700) of claim 6, wherein the at least one processor (706) coupled with the at least one memory is further configured to cause the apparatus (700) to:
receive the first data from an ingress RLC channel of an ingress link of the apparatus (700);
decode the first data into a BAP Protocol Data Unit (PDU), a header of the BAP PDU comprising a BAP address field; and
determine that there is no entry in the routing configuration having a same BAP address as the BAP address in the header of the BAP PDU; and
wherein the at least one processor (706) coupled with the at least one memory is further configured to cause the apparatus (700) to: select one available egress link of the apparatus (700) as the second egress link.

9. The apparatus (700) of claim 1, wherein the at least one processor (706) coupled with the at least one memory is further configured to cause the apparatus (700) to:
allow re-routing at the apparatus (700) in response to receiving the bearer mapping configuration.

10. The apparatus (700) of claim 1, wherein for BAP Protocol Data Unit, PDU, received from an ingress RLC channel of an ingress link, and for uplink BAP Service Data Unit, SDU, received from an upper layer, the bearer mapping configuration indicates a common default egress RLC channel of the second egress link for re-routing.

11. The apparatus (700) of claim 1, wherein for BAP Protocol Data Unit, PDU, received from an ingress RLC channel of an ingress link, and for uplink BAP Service Data Unit, SDU, received from an upper layer, the bearer mapping configuration indicates respective default egress RLC channels of the second egress link for re-routing.

12. The apparatus (700) of claim 1, wherein the at least one processor (706) coupled with the at least one memory is further configured to cause the apparatus (700) to:
detect a failure in a backhaul link between two communication devices;
select a candidate path identity from the at least one candidate path identity for downlink transmission, wherein an egress link associated with the selected candidate path identity does not include the failed backhaul link between the two communication devices; and
transmit the downlink transmission on the egress link.

13. A method (400) performed by an apparatus (700) for wireless communication, the method comprising:
receiving (411), from a base station, configuration information, wherein the configuration information indicates routing configuration and bearer mapping configuration;
detecting (413) a failure on a first egress link between the apparatus (700) and a first next hop communication device of the apparatus (700), wherein the first next hop communication device is a parent node of the apparatus (700);
re-routing first data intended to be transmitted on the first egress link, wherein the first data has not been acknowledged by a layer lower than a Backhaul Adaptation Protocol, BAP, layer of the apparatus (700);
reselecting a second egress link between the apparatus (700) and a second next hop communication device based on the routing configuration;
reselecting an egress Radio Link Control, RLC, channel of the second egress link based on bearer mapping configuration;
submitting the first data to the reselected egress RLC channel of the second egress link; and
transmitting, to the second next hop communication device, in response to the failure on the first egress link and re-routing the first data to the second next hop communication device, a Buffer Status Report, BSR, or a Pre-emptive BSR, Pre-BSR, associated with the first data to the second next hop communication device.

14. The method of claim 13, wherein the reselected egress RLC channel corresponds to a logical channel in a Logical Channel Group, LCG, and the logical channel is considered as having the highest priority level within the LCG.

15. The apparatus (700) of any of claims 1 to 12 or the method of claim 13 or claim 14, wherein the apparatus (700) is an Integrated Access and Backhaul, IAB, node.

## Patentansprüche

1. Vorrichtung (700) zur drahtlosen Kommunikation, umfassend: mindestens einen Speicher; und mindestens einen Prozessor (706), der mit dem mindestens einen Speicher gekoppelt und so konfiguriert ist, dass er die Vorrichtung (700) zu Folgendem veranlasst:
Empfangen (411), von einer Basisstation, von Konfigurationsinformationen, wobei die Konfigurationsinformationen die Routing-Konfiguration und die Trägerzuordnungskonfiguration angeben;
Erkennen (413) eines Ausfalls auf einer ersten Ausgangsverbindung zwischen der Vorrichtung (700) und einer ersten Next-Hop-Kommunikationsvorrichtung, wobei die erste Next-Hop-Kommunikationsvorrichtung ein übergeordneter Knoten der Vorrichtung (700) ist;
Re-Routen erster Daten, die über die erste Ausgangsverbindung übertragen werden sollen, wobei die ersten Daten nicht von einer Schicht bestätigt wurden, die unterhalb einer Backhaul-Adaptation-Protocol(BAP)-Schicht der Vorrichtung (700) liegt;
Neuauswählen einer zweiten Ausgangsverbindung zwischen der Vorrichtung (700) und einer zweiten Next-Hop-Kommunikationsvorrichtung auf der Grundlage der Routing-Konfiguration;
Neuauswählen eines Ausgangs-Radio-Link-Control(RLC)-Kanals der zweiten Ausgangsverbindung auf der Grundlage der Trägerzuordnungskonfiguration;
Übermitteln der ersten Daten an den neu ausgewählten Ausgangs-RLC-Kanal der zweiten Ausgangsverbindung; und
Senden, an die zweite Next-Hop-Kommunikationsvorrichtung, als Reaktion auf den Ausfall der ersten Ausgangsverbindung und das Re-Routen der ersten Daten an die zweite Next-Hop-Kommunikationsvorrichtung, eines Buffer-Status-Reports (BSR) oder eines Pre-emptive BSR (Pre-BSR), der den ersten Daten zugeordnet ist, an die zweite Next-Hop-Kommunikationsvorrichtung.

2. Vorrichtung (700) nach Anspruch 1, wobei der neu ausgewählte Ausgangs-RLC-Kanal einem logischen Kanal in einer logischen Kanalgruppe, LCG, entspricht und der logische Kanal als derjenige mit der höchsten Prioritätsstufe innerhalb der LCG angesehen wird.

3. Vorrichtung (700) nach Anspruch 1, wobei der mindestens eine Prozessor (706), der mit dem mindestens einen Speicher gekoppelt ist, ferner so konfiguriert ist, dass er die Vorrichtung (700) zu Folgendem veranlasst:
Senden einer Scheduling-Anfrage, SR, an die zweite Next-Hop-Kommunikationsvorrichtung, falls keine Uplink-Ressource für das Senden des BSR oder des Pre-BSR verfügbar ist.

4. Vorrichtung (700) nach Anspruch 1, wobei die Konfigurationsinformationen ferner mindestens eine Kandidaten-Routing-Identität angeben und wobei jede Kandidaten-Routing-Identität eine BAP-Adresse, eine BAP-Pfadidentität und eine Next-Hop-BAP-Adresse angibt.

5. Vorrichtung (700) nach Anspruch 4, wobei der mindestens eine Prozessor (706), der mit dem mindestens einen Speicher gekoppelt ist, ferner so konfiguriert ist, dass er die Vorrichtung (700) zu Folgendem veranlasst:
Empfangen von zweiten Daten von einer höheren Schicht; und
Kodieren der zweiten Daten in eine BAP-Protokoll-Dateneinheit (PDU), die ein BAP-Adressfeld und ein Pfadfeld umfasst, durch:
Neuauswählen einer Kandidaten-Routing-Identität aus der mindestens einen Kandidaten-Routing-Identität, wobei eine der ausgewählten Kandidaten-Routing-Identität zugeordnete Ausgangsverbindung nicht die ausgefallene erste Ausgangsverbindung zwischen der Vorrichtung (700) und der ersten Next-Hop-Kommunikationsvorrichtung einschließt; und
Konstruieren der BAP-PDU, indem das BAP-Adressfeld auf die BAP-Adresse der ausgewählten Kandidaten-Routing-Identität und das Pfadfeld auf die BAP-Pfadidentität der ausgewählten Kandidaten-Routing-Identität eingestellt wird.

6. Vorrichtung (700) nach Anspruch 1, wobei die Routing-Konfiguration mindestens einen Eintrag umfasst, wobei jeder Eintrag eine BAP-Adresse und eine Next-Hop-BAP-Adresse umfasst.

7. Vorrichtung (700) nach Anspruch 6, wobei jeder Eintrag der Routing-Konfiguration ferner eine Pfadidentität umfasst.

8. Vorrichtung (700) nach Anspruch 6, wobei der mindestens eine Prozessor (706), der mit dem mindestens einen Speicher gekoppelt ist, ferner so konfiguriert ist, dass er die Vorrichtung (700) zu Folgendem veranlasst:
Empfangen der ersten Daten von einem Eingangs-RLC-Kanal einer Eingangsverbindung der Vorrichtung (700);
Dekodieren der ersten Daten in eine BAP-Protokoll-Dateneinheit (PDU), wobei ein Header der BAP-PDU ein BAP-Adressfeld umfasst; und
Bestimmen, dass es in der Routing-Konfiguration keinen Eintrag gibt, der dieselbe BAP-Adresse wie die BAP-Adresse im Header der BAP-PDU aufweist; und
wobei der mindestens eine Prozessor (706), der mit dem mindestens einen Speicher gekoppelt ist, ferner so konfiguriert ist, dass er die Vorrichtung (700) veranlasst, eine verfügbare Ausgangsverbindung der Vorrichtung (700) als zweite Ausgangsverbindung auszuwählen.

9. Vorrichtung (700) nach Anspruch 1, wobei der mindestens eine Prozessor (706), der mit dem mindestens einen Speicher gekoppelt ist, ferner so konfiguriert ist, dass er die Vorrichtung (700) zu Folgendem veranlasst:
Zulassen eines Re-Routen an der Vorrichtung (700) als Reaktion auf den Empfang der Trägerzuordnungskonfiguration.

10. Vorrichtung (700) nach Anspruch 1, wobei für eine BAP-Protokoll-Dateneinheit (PDU), die von einem Eingangs-RLC-Kanal einer Eingangsverbindung empfangen wird, und für eine Uplink-BAP-Dienst-Dateneinheit (SDU), die von einer höheren Schicht empfangen wird, die Trägerzuordnungskonfiguration einen gemeinsamen Standard-Ausgangs-RLC-Kanal der zweiten Ausgangsverbindung für das Re-Routen angibt.

11. Vorrichtung (700) nach Anspruch 1, wobei für eine BAP-Protokoll-Dateneinheit (PDU), die von einem Eingangs-RLC-Kanal einer Eingangsverbindung empfangen wird, und für eine Uplink-BAP-Dienst-Dateneinheit (SDU), die von einer höheren Schicht empfangen wird, die Trägerzuordnungskonfiguration jeweilige Standard-RLC-Ausgangskanäle der zweiten Ausgangsverbindung für das Re-Routen angibt.

12. Vorrichtung (700) nach Anspruch 1, wobei der mindestens eine Prozessor (706), der mit dem mindestens einen Speicher gekoppelt ist, ferner so konfiguriert ist, dass er die Vorrichtung (700) zu Folgendem veranlasst:
Erkennen eines Ausfalls in einer Backhaul-Verbindung zwischen zwei Kommunikationsvorrichtungen;
Auswählen einer Kandidatenpfad-Identität aus der mindestens einen Kandidatenpfad-Identität für die Downlink-Übertragung, wobei eine der ausgewählten Kandidatenpfad-Identität zugeordnete Ausgangsverbindung die ausgefallene Backhaul-Verbindung zwischen den beiden Kommunikationsvorrichtungen nicht einschließt; und
Senden der Downlink-Übertragung über die Ausgangsverbindung.

13. Verfahren (400), das von einer Vorrichtung (700) zur drahtlosen Kommunikation ausgeführt wird, wobei das Verfahren umfasst:
Empfangen (411), von einer Basisstation, von Konfigurationsinformationen, wobei die Konfigurationsinformationen die Routing-Konfiguration und die Trägerzuordnungskonfiguration angeben;
Erkennen (413) eines Ausfalls auf einer ersten Ausgangsverbindung zwischen der Vorrichtung (700) und einer ersten Next-Hop-Kommunikationsvorrichtung der Vorrichtung (700), wobei die erste Next-Hop-Kommunikationsvorrichtung ein übergeordneter Knoten der Vorrichtung (700) ist;
Re-Routen erster Daten, die über die erste Ausgangsverbindung übertragen werden sollen, wobei die ersten Daten nicht von einer Schicht bestätigt wurden, die unterhalb einer Backhaul-Adaptation-Protocol(BAP)-Schicht der Vorrichtung (700) liegt;
Neuauswählen einer zweiten Ausgangsverbindung zwischen der Vorrichtung (700) und einer zweiten Next-Hop-Kommunikationsvorrichtung auf der Grundlage der Routing-Konfiguration;
Neuauswählen eines Ausgangs-Radio-Link-Control(RLC)-Kanals der zweiten Ausgangsverbindung auf der Grundlage der Trägerzuordnungskonfiguration;
Übermitteln der ersten Daten an den neu ausgewählten Ausgangs-RLC-Kanal der zweiten Ausgangsverbindung; und
Senden, an die zweite Next-Hop-Kommunikationsvorrichtung, als Reaktion auf den Ausfall der ersten Ausgangsverbindung und das Re-Routen der ersten Daten an die zweite Next-Hop-Kommunikationsvorrichtung, eines Buffer-Status-Report (BSR) oder eines Pre-emptive BSR (Pre-BSR), der den ersten Daten zugeordnet ist, an die zweite Next-Hop-Kommunikationsvorrichtung.

14. Verfahren nach Anspruch 13, wobei der neu ausgewählte Ausgangs-RLC-Kanal einem logischen Kanal in einer Logical Channel Group (LCG) entspricht und der logische Kanal als derjenige mit der höchsten Prioritätsstufe innerhalb der LCG betrachtet wird.

15. Vorrichtung (700) nach einem der Ansprüche 1 bis 12 oder Verfahren nach Anspruch 13 oder 14, wobei die Vorrichtung (700) ein Integrated-Access-and-Backhaul (IAB)-Knoten ist.

## Revendications

1. Appareil (700) de communication sans fil, comprenant : au moins une mémoire ; et au moins un processeur (706) couplé à l'au moins une mémoire et configuré pour amener l'appareil (700) à :
recevoir (411), d'une station de base, des informations de configuration, les informations de configuration indiquant une configuration de routage et une configuration de mappage de porteuses ;
détecter (413) une défaillance sur une première liaison de sortie entre l'appareil (700) et un premier dispositif de communication de saut suivant, le premier dispositif de communication de saut suivant étant un nœud parent de l'appareil (700) ;
réacheminer des premières données destinées à être transmises sur la première liaison de sortie, lesdites premières données n'ayant pas fait l'objet d'un accusé de réception par une couche inférieure à la couche de protocole d'adaptation de liaison de raccordement, BAP, de l'appareil (700) ;
resélectionner une seconde liaison de sortie entre l'appareil (700) et un second dispositif de communication de saut suivant sur la base de la configuration de routage ;
resélectionner un canal de commande de liaison radio, RLC, de sortie de la seconde liaison de sortie sur la base de la configuration de mappage de porteuses ;
soumettre les premières données au canal RLC de sortie resélectionné de la seconde liaison de sortie ; et
transmettre, au second dispositif de communication de saut suivant, en réponse à la défaillance sur la première liaison de sortie et au réacheminement des premières données vers le second dispositif de communication de saut suivant, un rapport d'état de tampon, BSR, ou un BSR préemptif, Pré-BSR, associé aux premières données, vers le second dispositif de communication de saut suivant.

2. Appareil (700) de la revendication 1, dans lequel le canal RLC de sortie resélectionné correspond à un canal logique au sein d'un groupe de canaux logiques, LCG, et le canal logique est considéré comme ayant le niveau de priorité le plus élevé au sein du LCG.

3. Appareil (700) de la revendication 1, dans lequel l'au moins un processeur (706) couplé à l'au moins une mémoire est en outre configuré pour amener l'appareil (700) à :
transmettre une demande de planification, SR, au second dispositif de communication de saut suivant s'il n'y a pas de ressource de liaison montante disponible pour transmettre le BSR ou le Pré-BSR.

4. Appareil (700) de la revendication 1, dans lequel les informations de configuration indiquent en outre au moins une identité de routage candidate, et dans lequel chaque identité de routage candidate indique une adresse BAP, une identité de chemin BAP et une adresse BAP de saut suivant.

5. Appareil (700) de la revendication 4, dans lequel l'au moins un processeur (706) couplé à l'au moins une mémoire est en outre configuré pour amener l'appareil (700) à :
recevoir des secondes données provenant d'une couche supérieure ; et
coder les secondes données en une unité de données de protocole, PDU, BAP, comprenant un champ d'adresse BAP et un champ de chemin, en :
resélectionnant une identité de routage candidate parmi l'au moins une identité de routage candidate, dans laquelle une liaison de sortie associée à l'identité de routage candidate sélectionnée n'inclut pas la première liaison de sortie défaillante entre l'appareil (700) et le premier dispositif de communication de saut suivant ; et
construisant la PDU BAP en définissant le champ d'adresse BAP sur l'adresse BAP de l'identité de routage candidate sélectionnée et en définissant le champ de chemin sur l'identité de chemin BAP de l'identité de routage candidate sélectionnée.

6. Appareil (700) de la revendication 1, dans lequel la configuration de routage comprend au moins une entrée, chaque entrée comprenant une adresse BAP et une adresse BAP de saut suivant.

7. Appareil (700) de la revendication 6, dans lequel chaque entrée de la configuration de routage comprend en outre une identité de chemin.

8. Appareil (700) de la revendication 6, dans lequel l'au moins un processeur (706) couplé à l'au moins une mémoire est en outre configuré pour amener l'appareil (700) à :
recevoir les premières données d'un canal RLC d'entrée d'une liaison d'entrée de l'appareil (700) ;
décoder les premières données en une unité de données de protocole, PDU, BAP, un en-tête de la PDU BAP comprenant un champ d'adresse BAP ; et
déterminer qu'il n'existe aucune entrée dans la configuration de routage ayant la même adresse BAP que l'adresse BAP figurant dans l'en-tête de la PDU BAP ; et
dans lequel l'au moins un processeur (706) couplé à l'au moins une mémoire est en outre configuré pour amener l'appareil (700) à : sélectionner une liaison de sortie disponible de l'appareil (700) en tant que seconde liaison de sortie.

9. Appareil (700) de la revendication 1, dans lequel l'au moins un processeur (706) couplé à l'au moins une mémoire est en outre configuré pour amener l'appareil (700) à :
autoriser le réacheminement au niveau de l'appareil (700) en réponse à la réception de la configuration de mappage de porteuses.

10. Appareil (700) de la revendication 1, dans lequel, pour l'unité de données de protocole, PDU, BAP reçue d'un canal RLC d'entrée d'une liaison d'entrée, et pour une unité de données de service, SDU, BAP de liaison montante reçue d'une couche supérieure, la configuration de mappage de porteuses indique un canal RLC de sortie par défaut commun de la seconde liaison de sortie à réacheminer.

11. Appareil (700) de la revendication 1, dans lequel, pour une unité de données de protocole, PDU, BAP reçue d'un canal RLC d'entrée d'une liaison d'entrée, et pour une unité de données de service, SDU, BAP de liaison montante reçue d'une couche supérieure, la configuration de mappage de porteuses indique des canaux RLC de sortie par défaut respectifs de la seconde liaison de sortie à réacheminer.

12. Appareil (700) de la revendication 1, dans lequel l'au moins un processeur (706) couplé à l'au moins une mémoire est en outre configuré pour amener l'appareil (700) à :
détecter une défaillance dans une liaison de raccordement entre deux dispositifs de communication ;
sélectionner une identité de chemin candidate parmi l'au moins une identité de chemin candidate pour une transmission en liaison descendante, dans laquelle une liaison de sortie associée à l'identité de chemin candidate sélectionnée n'inclut pas la liaison de raccordement défaillante entre les deux dispositifs de communication ; et
transmettre la transmission en liaison descendante sur la liaison de sortie.

13. Procédé (400) mis en œuvre par un appareil (700) de communication sans fil, le procédé comprenant :
la réception (411), en provenance d'une station de base, d'informations de configuration, les informations de configuration indiquant une configuration de routage et une configuration de mappage de porteuses ;
la détection (413) d'une défaillance sur une première liaison de sortie entre l'appareil (700) et un premier dispositif de communication de saut suivant de l'appareil (700), le premier dispositif de communication de saut suivant étant un nœud parent de l'appareil (700) ;
le réacheminement de premières données destinées à être transmises sur la première liaison de sortie, les premières données n'ayant pas fait l'objet d'un accusé de réception par une couche inférieure à la couche de protocole d'adaptation de liaison de raccordement, BAP, de l'appareil (700) ;
la resélection d'une seconde liaison de sortie entre l'appareil (700) et un second dispositif de communication de saut suivant sur la base de la configuration de routage ;
la resélection d'un canal de commande de liaison radio, RLC, de sortie de la seconde liaison de sortie sur la base de la configuration de mappage de porteuses ;
la soumission des premières données au canal RLC de sortie resélectionné de la seconde liaison de sortie ; et
la transmission, au second dispositif de communication de saut suivant, en réponse à la défaillance sur la première liaison de sortie et au réacheminement des premières données vers le second dispositif de communication de saut suivant, d'un rapport d'état de tampon, BSR, ou d'un BSR préemptif, Pré-BSR, associé aux premières données, vers le second dispositif de communication de saut suivant.

14. Procédé de la revendication 13, dans lequel le canal RLC de sortie resélectionné correspond à un canal logique au sein d'un groupe de canaux logiques, LCG, et le canal logique est considéré comme ayant le niveau de priorité le plus élevé au sein du LCG.

15. Appareil (700) de l'une quelconque des revendications 1 à 12, ou procédé de la revendication 13 ou 14, dans lequel l'appareil (700) est un nœud de liaison de raccordement et d'accès intégré, IAB.
